# EUROPEAN PATENT APPLICATION

(11) **EP 2 030 836 A1**
(43) Date of publication of application: **04.03.2009**
(21) Application number: 08014996.6
(22) Date of filing: 25.08.2008
(51) Int. Cl.: B60N 2/46, B60N 3/10, B60R 7/04, B60H 1/24

(54) **A center console structure of a vehicle**

(30) Priority: 29.08.2007 JP 2007222996; 29.08.2007 JP 2007222995
(71) Applicant: Mazda Motor Corporation, Fuchu-cho Aki-gun Hiroshima, Hiroshima 730-8670 (JP)
(72) Inventor: Ioka, Tadashi, Aki-gun Hiroshima 730-8670 (JP); Inoue, Yoshitaka, Aki-gun Hiroshima 730-8670 (JP)
(74) Representative: Müller-Boré & Partner Patentanwälte

(57) **Abstract**

A center console structure comprises a console body 11, a storage portion 12 which is provided inside the console body so as to extend longitudinally having a specified height vertically and has an upper opening and a rear opening, an armrest 13 which is provided so as to open and close the upper opening and has a rear vent at its rear portion, and a blower 14 provided in front of the storage portion of the console body. The armrest 13 connects to an air-conditioning air duct 17 which is provided so as to connect to the blower and extends upward in front of the storage portion, and it has an inside duct 18 inside.

## Description

The present invention relates to a center console structure to be disposed or mounted in a vehicle compartment.

Japanese Patent Laid-Open Publication No. 10-016630, for example, discloses a conventional structure of a center console with a rear vent, in which a lid can be turned over so as to provide a temperature-conditioned cup holder. According to this structure, since the conditioning air is supplied from a portion near a rear seat, the conditioning air can reach a passenger seated in the rear seat properly. Also, Japanese Utility Model Laid-Open Publication No. 63-119446 discloses an armrest which opens forward and a storage portion which is accessible from both front and rear seats. The storage portion can be used by both passengers seated in the front and rear seats.

It may be preferable to provide a center console which has the above-described structures with the height of the storage portion being tall enough to accommodate a large bottle of 1.5 litters or more. Further, it may be preferable that a rear blower be disposed so that the amount of air supplied from the rear vent can be large enough. Herein, if the rear blower was disposed at a rear portion of the center console, a space in front of the rear seat would be restricted. Therefore, it may be preferable that the rear blower be disposed in front of the storage portion and the rear blower and the rear vent be interconnected via an air-conditioning air duct.

Herein, according to the center console disclosed in the former of the above-described patent publications, since the duct is disposed so as to extend longitudinally inside a console body, the storage portion may become small. Further, since the duct extends around the storage portion, it may bend so greatly that loss of the flow amount or the heat of the conditioning air flowing would become improperly large. Meanwhile, the latter of the above-described patent publications discloses no description regarding the rear vent and makes no suggestion about a structure in which the rear vent and an air-conditioning operational portion are disposed at the armrest.

Further, Japanese Patent Laid-Open Publication No. 2001-040932 discloses an armrest which opens both forward and rearward. This armrest's storage portion opening upward is easily accessible from both front and rear seats. Japanese Patent Laid-Open Publication No. 09-202168 discloses a temperature adjustable structure which comprises upper and lower storage portions 6, 11 which open at a console body 1 on its rear face and a temperature-controlled box 15 which opens upward. Thereby, there can be provided the temperature-adjustable storage portions for the front and rear seats

Herein, the armrest disclosed in the former of the above-described patent publications just opens forward and rearward, but does not become a cup holder. It has no lower storage portion opening at a rear and lower portion, either. Meanwhile, the structure disclosed in the latter may require an electric temperature adjusting device at the respective storage portions, so that a burden on a battery would be increased. It does not have the rear vent, rear blower, or air-conditioning air duct.

The present invention has been devised in view of the above-described matters, and an object of the present invention is to provide a center console structure of a vehicle which can provide utilities to the both front and rear seats properly.

This object is solved by the center console structure of a vehicle according to the present invention of claim 1. Preferred embodiments of the present invention are subject of the dependent claims.

According to the present invention, there is provided a center console structure of a vehicle, which is located between both-side seats, preferably front seats, and in front of a rear seat(s) or a middle seat(s), comprising a console body, an upper opening which opens at the console body on an upper side and/or a rear opening which opens at the console body on a rear side, a storage portion which is provided inside the console body so as to extend longitudinally having a specified height vertically, a rear vent provided at an upper portion of the storage portion, air supply means, preferably a blower, provided in front of the storage portion of the console body, and an air-conditioning air duct which is provided so as to connect to the air supply means and supply conditioning air to the rear vent.

According to a preferred embodiment, there is provided a center console structure of a vehicle, which is located between both-side seats and in front of a rear seat, comprising a console body, an upper opening which opens at the console body on an upper side, a rear opening which opens at the console body on a rear side, a storage portion which is provided inside the console body so as to extend longitudinally having a specified height vertically and at least to connect to the rear opening, an armrest which is supported at the console body so as to open and close the upper opening, a rear vent provided at an upper portion of the storage portion, a blower provided in front of the storage portion of the console body, and an air-conditioning air duct which is provided so as to connect to the blower and supply conditioning air to the rear vent.

According to the present invention, since there are provided the upper opening and the armrest operative to open and close the upper opening, the proper utility for the front seat can be obtained. Further, since there are provided the rear opening without the armrest, the storage portion with the specified height and the rear vent positioned at a properly high level, the proper utility for the front seat can be obtained. Thus, the utilities to the both front and rear seats can be provided properly.

According to an embodiment of the present invention, the storage portion is configured to connect to the upper opening, and the armrest includes the rear vent which is formed at a rear portion thereof and preferably an inside duct which interconnects the air-conditioning air duct and the rear vent, wherein said air supply means is preferably a blower and wherein said air conditioning duct preferably includes a conditioning-air nozzle which connects to an inside of the storage portion. Thereby, the armrest with a proper height, the storage portion with the specified height which is accessible from the front and rear seats, the rear vent positioned at the properly high level, and the blower are constituted in a compact manner.

According to another embodiment of the present invention, the storage portion includes a storage box which has an upper opening and a rear face which forms a rear wall of the console body, the storage box being configured to be stored inside the console body and drawn rearward out of the console body. Thereby, the storage box drawn rearward is made be located so close to the rear seat that the utility for the rear seat can be improved.

According to another embodiment of the present invention, the storage box includes a shutter which is operative to close the upper opening so as to form a tray, the shutter being configured to move to a closing position thereof in which the shutter closes the upper opening when the storage box has been drawn rearward out of the console body. Thereby, the upper face of the storage box can be available as the rear tray, keeping the height of the rear vent in the properly high level.

According to another embodiment of the present invention, the storage box includes an inlet of the conditioning air preferably supplied from the conditioning-air nozzle. Thereby, the temperature adjustment of the storage portion and the storage box are available.

According to another embodiment of the present invention, there is further provided a device operative to move the shutter to the closing position in a state in which the storage box is stored inside the console body. Thereby, the accessibility to the storage portion via the upper opening from the front seat can be improved.

According to another embodiment of the present invention, the storage portion is configured to be accessible via the upper opening in a state in which the storage box has been drawn rearward out of the console body. Thereby, the storage portion can be used effectively.

According to another embodiment of the present invention, an air-conditioning operational portion for a rear vent is provided at the rear face of the storage box. Thereby, the air-conditioning operational portion can be provided without narrowing the rear opening of the storage portion, and the storage box can be drawn further close to the rear seat.

According to another embodiment of the present invention, a shift lever is disposed or disposable in front of the armrest, the blower is preferably disposed below the shift lever, preferably a cup holder is disposed below and behind the shift lever, preferably an armrest is disposed at a level which is lower than the shift lever and higher than the cup holder, and the air-conditioning air duct is provided so as to extend upward from the blower, passing below the cup holder. Thereby, the armrest can be disposed at a proper location, and the cup holder and the air-conditioning air duct can be disposed in the compact manner.

According to another embodiment of the present invention, an upper storage portion which connects to the upper opening is provided at the console body, the storage portion is provided below the upper storage portion, the rear vent is provided at a rear face of the console body above the storage portion, and preferably the air-conditioning air duct is configured to extend between the upper storage and the storage portion and reach the rear vent. Thereby, despite a layout in which the blower is disposed in front of the upper storage portion and the storage portion and the rear vent is located rearward, the duct can be made properly short by utilizing a partition wall portion between the upper storage portion and the storage portion. Further, a preferable duct layout with less loss of the flow amount and the heat of the conditioning air flowing down and enlargement of the volume of the storage portions are compatible.

According to another embodiment of the present invention, the air-conditioning air duct forms a partition wall portion which partitions the upper storage portion from the storage portion, and preferably there is provided a heat-exchanging portion which performs heat exchanging between conditioning air and the upper storage portion or the storage portion. Thereby, both the temperature adjustment and the volume enlargement of the storage portions can be provided with the common partition wall portion. Further, the storage space can be made as larger as possible because there is no gap formed between the respective storage portions and the duct.

According to another embodiment of the present invention, the armrest comprises an upper lid and a lower lid which have substantially the same height and external shape, wherein preferably the upper lid has an opening which is operative to connect to the rear vent when the upper lid is turned over rearward, and preferably a tray portion is formed at a bottom face of the upper lid. Thereby, the upper lid can be the rear tray without substantially changing the height the armrest and without closing the rear vent.

According to another embodiment of the present invention, the air-conditioning air duct comprises a first duct which adjusts a temperature of the upper storage portion by using the conditioning air and a second duct which adjusts a temperature of the storage portion by using the conditioning air, and there are provided a conditioning-air separating portion which supplies the conditioning air having different temperatures to the first and second ducts and a conditioning-air mixing portion which mixes the conditioning air flowing down the first and second ducts respectively. Thereby, by using the conditioning air having different temperatures which flows down the both ducts and meets downstream, the different temperature adjustment can be provided for the storage portions, ensuring the supply of the conditioning air with an appropriate temperature to the rear seat.

According to another embodiment of the present invention, the armrest comprises a mechanism which enables the armrest to rotate forward around an axis provided at a front end of the upper storage portion or to rotate rearward around an axis provided at a rear end of the upper storage portion. Thereby, the upper storage potion is accessible from both the front and rear seats.

According to another embodiment of the present invention, a cup holder is provided above and in back of the blower, and a conditioning-air outlet of the conditioning air from the blower is provided below the cup holder. Thereby, the cup holder can be disposed in a compact manner between the blower and the air-conditioning air duct.

Other features, aspects, and advantages of the present invention will become apparent from the following description which refers to the accompanying drawings. Although specific embodiments are described separately, single features thereof may be combined in a desired manner so as to form further embodiments.
FIG. 1 is a schematic plan view of a vehicle compartment of a vehicle which is equipped with a center console structure according to a first embodiment of the present invention.
FIGS. **2A** and **2B** are perspective views of the center console structure.
FIG. **3** is a sectional view taken along line ii-ii of FIG. **2A****.**
FIGS. **4A** and **4B** are an upper view and a sectional view taken along line i-i of FIG. **1**.
FIGS. **5A - 5C** are sectional views showing a shutter mechanism, which correspond to FIG. **4B**.
FIG. **6** is a schematic plan view of the vehicle compartment of a vehicle which is equipped with a center console according to a second embodiment of the present invention.
FIGS. **7A - 7D** are perspective views of the center console.
FIG. **8** is a sectional view taken along line ii-ii of FIG. **7A**.
FIG. **9** is a sectional view taken along line i-i of FIG. **6**.
FIGS. **10A** and **10B** are views showing an opening and closing mechanism of an armrest.
FIG. **11** is a view showing a center console structure according to a third embodiment of the present invention, which corresponds to a sectional view taken along line ii-ii of FIG. **7A**.
FIG. **12** is a view showing a center console structure according to a fourth embodiment of the present invention, which corresponds to a sectional view taken along line i-i of FIG. **6**.
FIGS. **13A-13D** are diagrams showing a connection structure of a blower and an air-conditioning air duct to achieve the fourth embodiment..
FIG. **14** is a diagram schematically showing a structure of an air conditioner.
FIG. **15** is a view showing the center console structure according to the fourth embodiment, which corresponds to a sectional view taken along line ii-ii of FIG. **7A**.
FIG. **16** is a view showing a center console structure according to a modification of the fourth embodiment, which corresponds to a sectional view taken along line ii-ii of FIG. **7A**.

Hereinafter, preferred embodiments of the present invention will be described referring to the accompanying drawings.

These are merely some examples of the present invention. The present invention should not be limited to these embodiments, and any other modifications and improvements may be applied within the scope of the present invention, as defined by the appended claims. In particular, single features of the embodiments can be combined to form further embodiments.

### EMBODIMENT 1

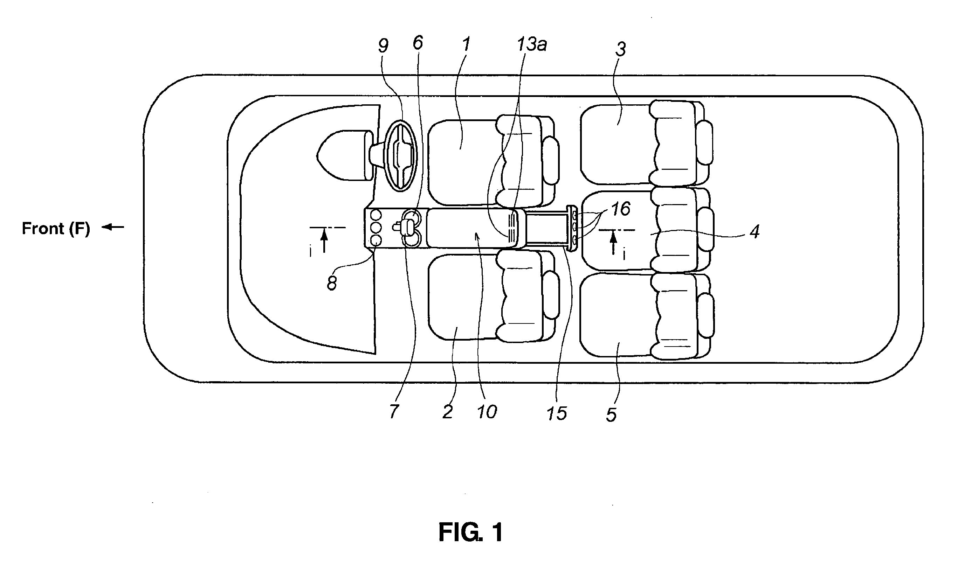

FIG. **1** is a schematic plan view of a vehicle compartment of a vehicle according to the present embodiment.

As shown in FIG. **1**, a center console **10** is disposed between both-side front seats in the vehicle compartment, i.e., a driver's seat **1** and a passenger's seat **2**. A cup holder **6** is provided in front of the center console **10**. A shift lever **7** and an air-conditioning operational portion **8** for the front seats are disposed further before. A rear face of the center console **10** is located in front of a center rear seat **4**. Beside the shift lever **7** is provided a steering wheel **9**, a lower portion of which is located substantially at the same level as a knob of the shift lever **7**.

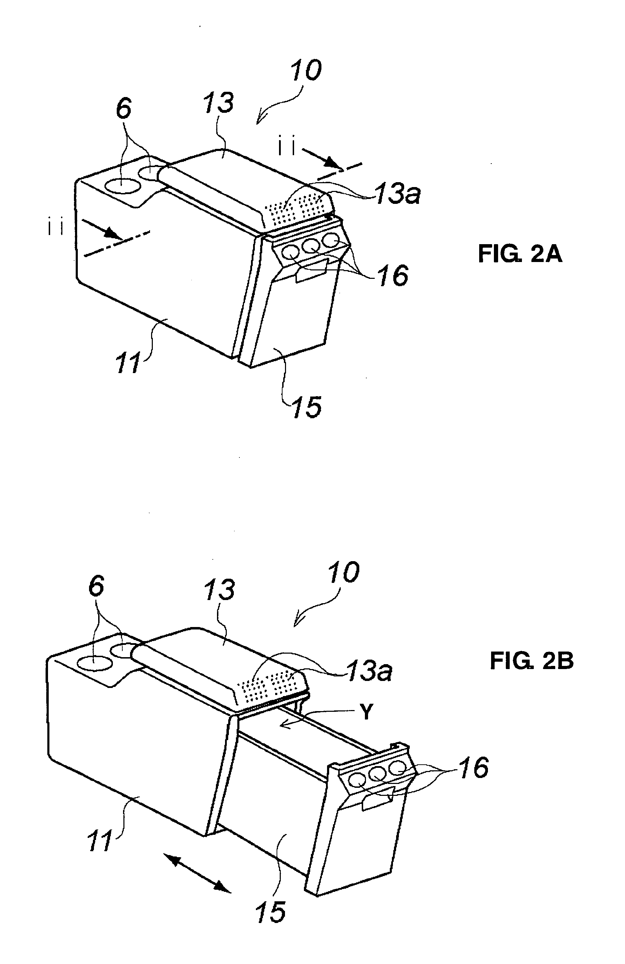

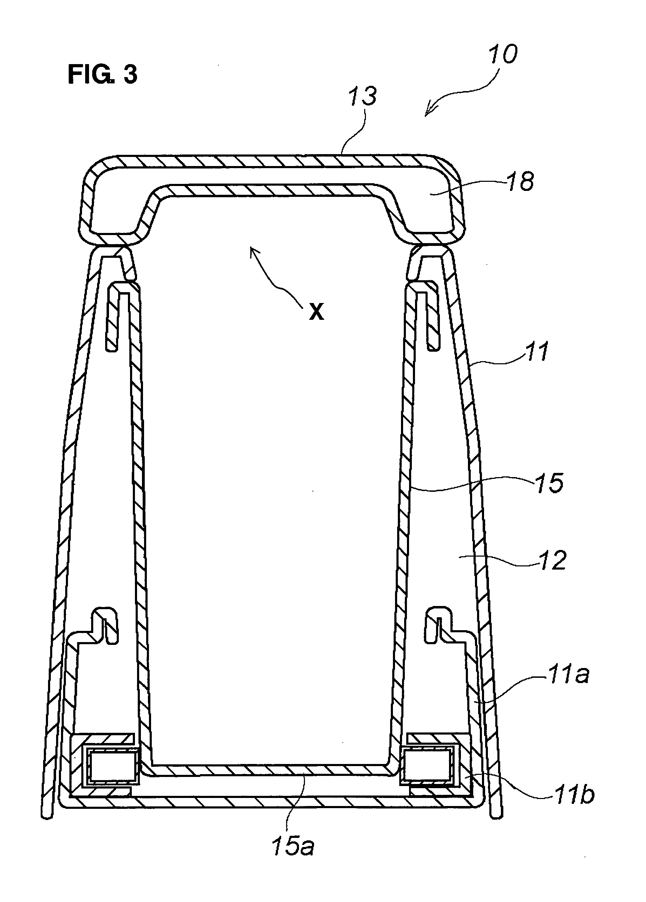

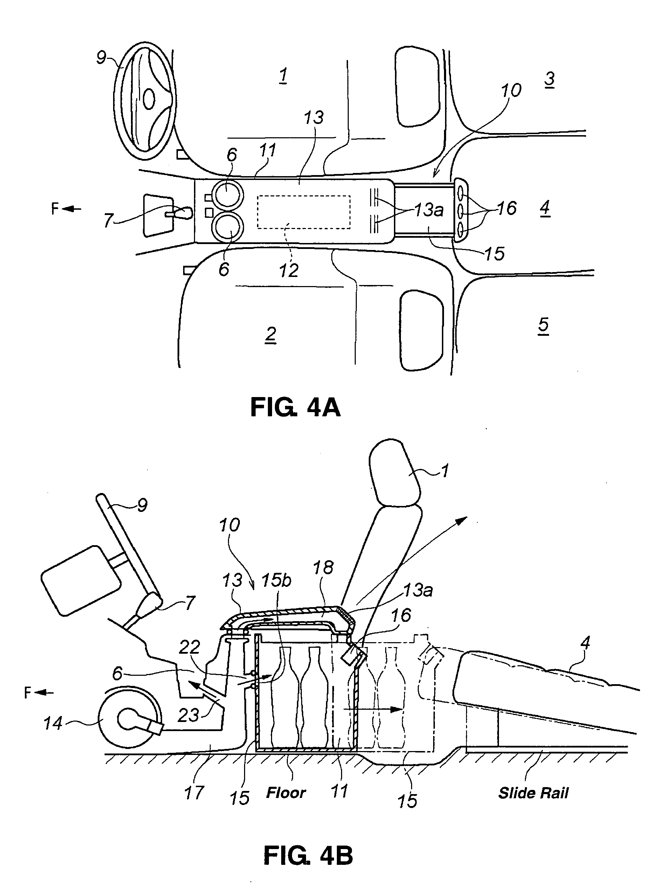

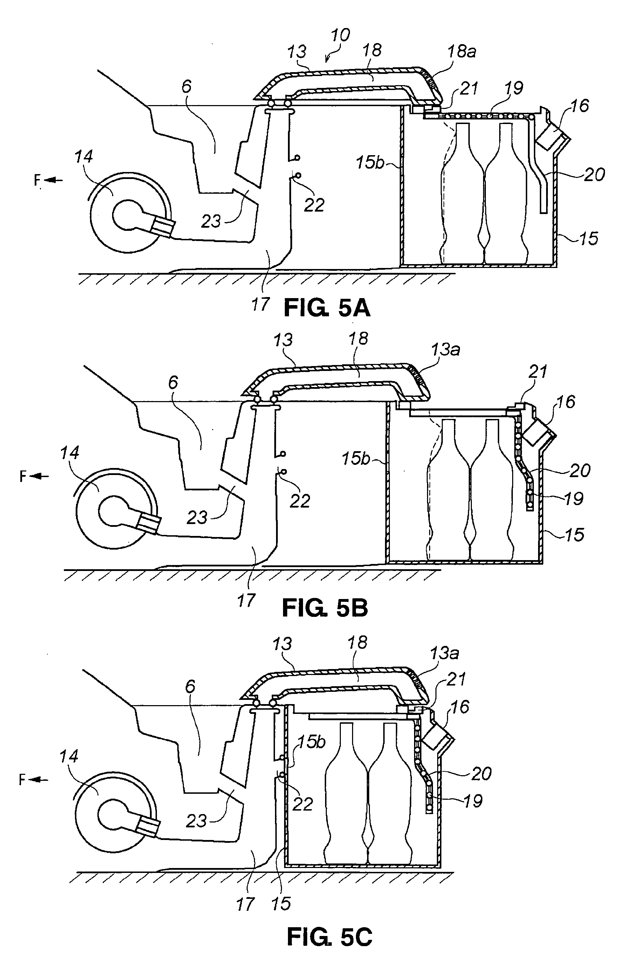

FIGS. **2A** and **2B** are perspective views showing a structure of the center console according to the present embodiment. FIG. **2A** shows a state in which a storage box is stored, FIG. **2B** shows a state in which the storage box is drawn out. FIG. **3** is a sectional view taken along line ii-ii of FIG. **2A**. FIG. **4A** is an upper view of FIG. **1**, and FIG. **4B** is a sectional view taken along line i-i of FIG. **1**. FIGS. **5A, 5B** and **5C** are sectional views showing a shutter mechanism, which correspond to FIG. **4B**. FIG. **5A** shows a closing position of a shutter, and FIGS. **5B** and **5C** show an opening position of the shutter.

The center console **10**, as shown in FIGS. **2** through **4**, comprises a console body **11** which has a hollow preferably substantially box-shaped outer shape and extends substantially in a vehicle longitudinal direction, a storage portion **12** which is provided inside the console body **11** so as to extend longitudinally having a specified height vertically (which is tall enough to accommodate a large pet bottle or others of 1.5 litters or more) and has an upper opening **X** and a rear opening **Y**, an armrest **13** which is supported at the console body **11** so as to open and close the upper opening **X** of the storage portion **12** and has a nozzle (rear vent) **13a** formed at its rear portion which has an adjustable air-supply direction function, a blower as a preferred air supply means **14** which is provided in front of the console body **11** and supply conditioning air.

The storage portion **12** includes a storage box **15** which has an upper opening and a rear face which forms a rear wall of the console body **11**. The storage box **15** has a bottom portion **15a** which is supported such as to be slidable substantially in a longitudinal direction by providing preferably a pair of slide rails **11 b**, and the storage box **15** is configured to be stored inside the console body **11** and drawn rearward out of the console body **11**. Thereby, the storage box **15** drawn rearward is made be located so close to the center rear seat **4** that the utility for the rear seats can be improved.

An air-conditioning operational portion **16** for a rear vent (nozzles for the rear seats **3-5**) is provided at the rear face of the storage box **15**. Thereby, the air-conditioning operational portion **16** can be provided without narrowing the rear opening **Y** of the storage portion **12**, and the storage box **15** can be drawn further close to the center rear seat **4**. Further, even in a state in which the rear face of the storage box **15** drawn rearward contacts the center rear seat **4**, the air-conditioning operation is available by using the air-conditioning operational portion **16** which is provided so as to face upward.

The armrest **13** includes an inside duct **18** which connects to an air-conditioning air duct **17**, which extends upward from the blower **14** in front of the storage portion **12.** Herein, in a state in which the armrest **13** is opened and the storage box **15** is drawn out of the console body **11**, the storage portion **12** is accessible via the upper opening **X** of the console body **11**, so that the inside space of the storage portion **12** can be used effectively.

As shown in FIG. **5****,** the storage box **15** includes a shutter **19** which is operative to close the upper opening so as to form a tray. Both end portions of the shutter **19** are supported at a guide rail **20** which is disposed so as to extend from the upper opening of the storage box **15** along its rear face. The shutter **19** is configured so that a lid knob **21**, which is attached to one end of the shutter **19,** slides on the guide rail **20**, so that it can move between its opening position and its closing position as shown. The lid knob **21** is configured to engage with an inner wall of the console body **11** in a state in which the storage box **15** is stored in the console body **11**. Thereby, according to the drawing or pulling of the storage box **15** out of the console body **11**, the shutter **19** can be located at its closing position (closing the upper opening of the storage box **15**, FIG. **5A**). Thereby, the upper face of the storage box **15** can be available as the rear tray, and the temperature of the storage box **15** can be maintained. Further, by moving the lid knob **21** rearward in this state, the shutter **19** can be moved to its opening position (FIG. **5B**). On the contrary, when the storage box **15** is moved to be stored in the console body **11** in a state in which the lid knob **21** engages with the console body **11**, the shutter **19** is moved to its opening position (opening the upper opening of the storage box **15**, FIG. **5C**). Thereby, the shutter **19** is always open whenever the storage box **15** is stored by a passenger seated in the rear seat, so that the storage box **15** can be made in a state in which it is accessible from the front seat via the upper opening of the storage box **15**, by opening the armrest **13**.

The air-conditioning air duct **17** extending from the blower **14** includes a conditioning-air nozzle **22** which connects to the inside of the storage portion **12**, and the storage box **15** includes an inlet **15b** of the conditioning air supplied from the conditioning-air nozzle **22**. Thereby, the temperature adjustment of the storage portion **12** and the storage box **15** are available.

Further, the air-conditioning air duct **17** includes a conditioning-air nozzle **23** which connects to the cup holder **6**. Thereby, the conditioning air can be supplied to the cup holder **6**.

Also, the shift lever **7** is disposed in front of the armrest **13** of the console body **11**. The blower **14** is disposed below the shift lever **7**, and the cup holder **6** is disposed below and behind the shift lever **7**. The armrest **13** is disposed at a level which is lower than the shift lever **7** and higher than the cup holder **6**. The air-conditioning air duct **17** is provided so as to extend upward from the blower **14**, passing below the cup holder **6**, and connect to the inside duct **18**. Thereby, a driver can properly operate the sift lever **7** and the steering wheel **9** without any improper interference with a cup or the like in the cup holder **6**. The armrest **13** can be disposed at a proper location so that the driver can easily put the cup or the like into the cup holder **6** or take them out of the cup holder **6**. Also, the cup holder **6**, the air-conditioning air duct **7**, and the blower **14** can be disposed in the compact manner.

According to the above-described embodiment, the armrest **13**, the storage portion **12** located at the proper level accessible from the front and rear seats **1-5**, the rear vent **13a** located at the higher level, and the air-conditioning operational portion **16** of the rear vent **13a** can be disposed in the compact manner.

Although the lid knob **21** for the shutter **19** is configured to engage with the inner wall of the console body **11** in the above-described embodiment, an engaging portion operative to engage with the lid knob **21** for the shutter **19** in the closing position may be provided on a side of the storage box **15**, and there may be provided an engagement portion, with which the lid knob **21** engages when the storage box 15 is stored in the console body **11**, for opening the shutter **19**. Thereby, the storage box 15 may be used as a container for objects soon after it has been drawn rearward, and it may be used as a tray when the shutter **19** has been closed.

### EMBODIMENT 2

Hereinafter, a center console structure according to a second embodiment of the present invention will be described. The same structures as those of the above-described first embodiment will be denoted by the same reference characters, detailed descriptions of which are omitted here.

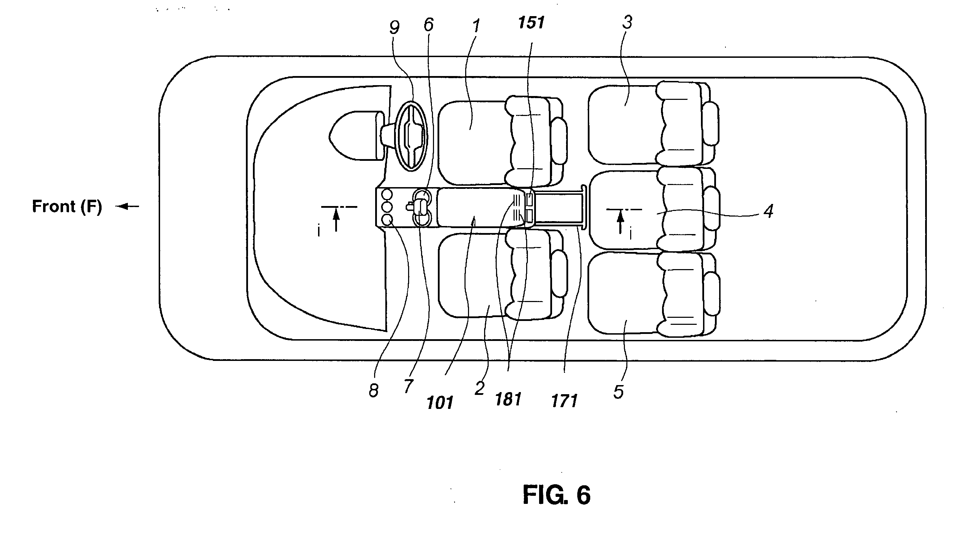

A center console **101** of the present embodiment is provided between the driver's seat **1** and the passenger's seat **2** likewise as shown in FIG. **6**.

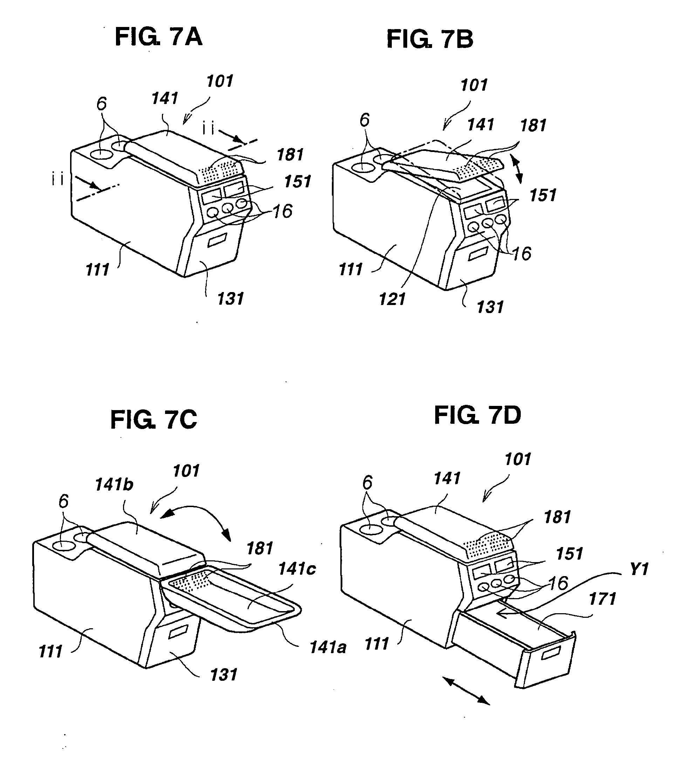

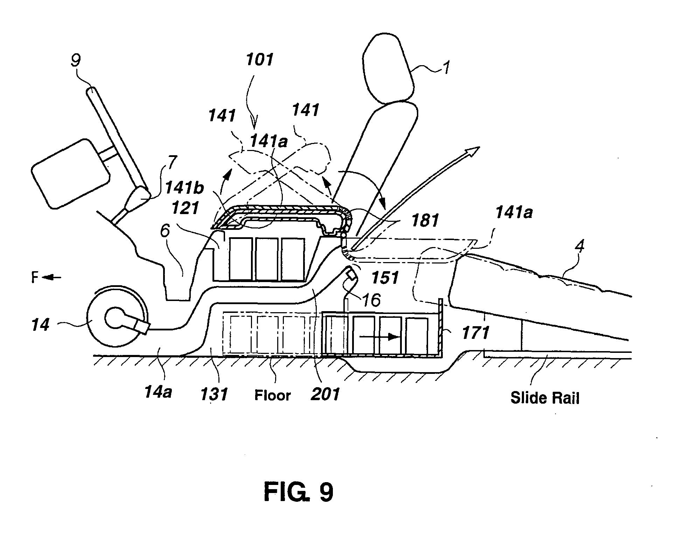

The center console **101**, as shown in FIGS. **7 - 10****,** comprises a console body **111** which has the hollow substantially box-shaped outer shape and extends substantially in the vehicle longitudinal direction, an upper storage portion **121** which is provided inside the console body **111** and has an upper opening **X1**, a storage portion **131** which is provided below the upper storage portion **121** inside the console body **111** and has a rear opening **Y1**, and an armrest **141** which is supported at the console body **111** so as to open and close the upper opening **X1** of the upper storage portion **121**.

Further, at a portion between the storage portion **131** and the armrest **141** are provided a nozzle (rear vent) **151** which has an adjustable conditioning-air-supply direction function and an air-conditioning operational portion **16** for the rear seat (for the passenger seated in the rear seat).

The storage portion **131** includes a storage box **171** which has a rear face which forms a rear lower wall of the console body **111.** The storage box **171** has upper edge portions **171a** which are supported so as to slide relative to a bottom portion **111 a** of the console body **111**, and the storage box **171** is configured to be stored inside the console body **111** and drawn preferably substantially rearward out of the console body **111**. Thereby, the storage box **171** drawn rearward is be located so close to the center rear seat 4 that the utility for the rear seats can be improved.

Also, openings **181** are formed at the rear face of the armrest **141,** i.e., at the rear face of the console body **111** above the storage portion **131**. The blower **14** to supply the conditioning air is disposed in front of the upper storage portion **121** and the storage portion **131**. The blower **14** and the rear vent **151** are interconnected via an air-conditioning air duct **201** which extends longitudinally inside the console body **111**. The air-conditioning air duct 201 passes between the upper storage **121** and the storage portion **131** and connects to the rear vent **151**.

Namely, the air-conditioning air duct **201** forms a partition wall portion **211** which partitions the upper storage portion **121** from the storage portion **131,** and there is provided a heat-exchanging portion which performs heat exchanging between conditioning air flowing down the air-conditioning air duct **201** and/or the upper storage portion **121** and/or the storage portion **131**. Preferably, the air-conditioning air duct **201** and the upper storage portion **121** or the storage portion **131** are interconnected via through holes **221**, thereby the conditioning air flowing down the air-conditioning air duct **201** is supplied to the upper storage portion **121** and/or the storage portion **131**.

The armrest **141** comprises an upper lid **141 a** and a lower lid **141 b** which have substantially the same height and external shape. The upper lid **141 a** has the above-described openings **181** which are operative to connect to the rear vent **151** when the upper lid **141 a** is turned over rearward, and a recess-shaped tray portion **141c** is formed at a bottom face of the upper lid **141a**. Thereby, the upper lid **141 a** can be the rear tray without substantially changing the height of the armrest **141** and without closing the rear vent **151**.

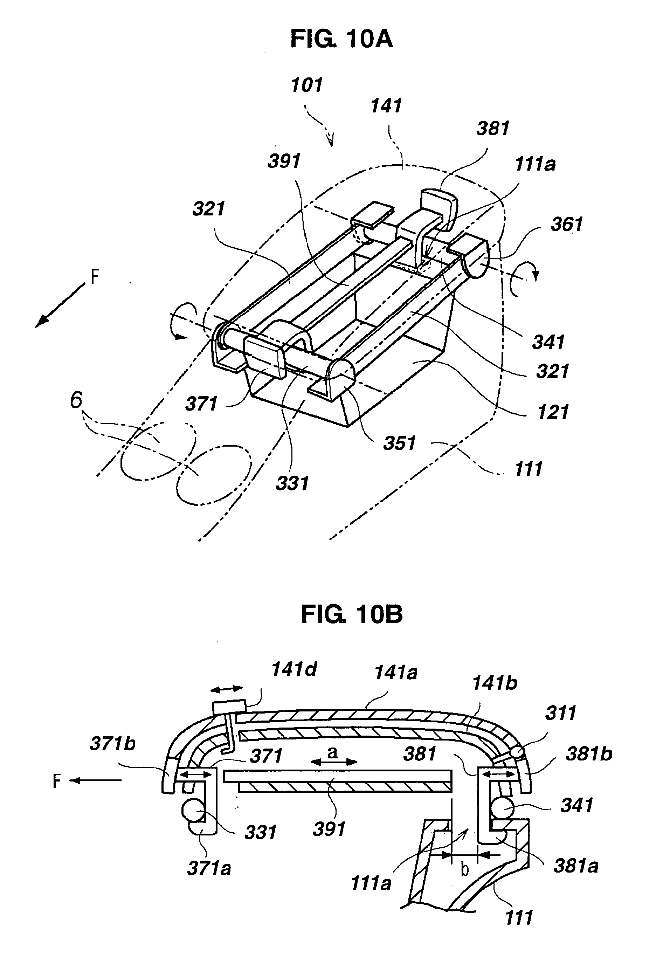

The armrest **141** with the upper lid **141** a and the lower lid **141 b** comprises a mechanism (which will be described specifically by referring to FIG. **10**) which enables the armrest **141** to rotate substantially forward around an axis provided at a front end of the upper storage portion **121** and to rotate substantially rearward around an axis provided at a rear end of the upper storage portion **121**. Thereby, the upper storage portion **121** is accessible from the front and rear seats **1 - 5**.

The cup holder **6** is disposed at an upper portion behind the blower **14**, and a conditioning-air outlet **14a** of the blower **14** connects to the air-conditioning air duct **201** extending below the cup holder **6.** Thereby, the cup holder can be disposed between the blower **14** and the air-conditioning air duct **201** in a compact manner.

As shown in FIGS. **5A** and **5B****,** the upper lid **141** a and the lower lid **141 b** are configured to be detachable with a lock **141d** and rotatable relative to each other around a hinge **311** provided at a rear end of the upper lid **141 a**. The armrest **141** comprises a pair of frames **321** which extends longitudinally in parallel to each other with a specified distance in the vehicle width direction, and front and rear end shafts **331, 341** which are pivotally supported at respective front and rear ends of the frames **321**. Further, as shown in Fig. **10A****,** front and rear mounts **351, 361** which pivotally support the above-described shafts **331, 341** are provided. The front mount **351** is fixed to the console body **111**, while the rear mount **361** is fixed to the lower lid **141b**.

The lower lid **141 b** is equipped with a front lock **371** and a rear lock **381** which are linked. The front and rear locks **371, 381** comprise hooks **371a**, **381a**, which are operative to slide longitudinally so as to engage with the front end shaft **331** and an engagement hole **111a** formed at the console body **111,** a link **391** which is operative to move one of the shafts to its engagement position when the engagement of the other shaft is released (disengaged), and operational knobs **371 b, 381 b** which are operated to conduct an engagement/disengagement operation of the locks **371, 381.**

The link **391**, which is made of a rod member extending longitudinally, is configured to slide longitudinally away from the front lock **371** or the rear lock **381** by a specified distance **a** in such a manner that its front end contacts or gets away from the front lock **371** and its rear end contacts or gets away from the rear lock **381**. Further, the respective locks **371, 381** are biased in the direction of engagement by biasing means such as a spring. Herein, it is set such that the above-described specified distance **a** is equal to a movable distance b of the locks **371, 381** or longer. And, when one of the locks **371, 381** is moved by the link **391** so that its engagement is released, the other of the locks **371, 381** is pushed by the link **391** in the direction of engagement as described above. Accordingly, the engagements of the both locks **371, 381** are prevented from being released at the same time.

According to the above-described embodiment, despite a layout in which the blower **14** is disposed in front of the upper storage portion **121** and the storage portion **131** and the rear vent **151** is located rearward, the duct can be made properly short by utilizing the partition wall portion between the upper storage portion **121** and the storage portion **131.** Further, a preferable duct layout with less loss of the flow amount and the heat of the conditioning air flowing down and an enlargement of the volume of the storage portions are compatible. Further, the storage space can be made as larger as possible because there is no gap formed between the respective storage portions **121, 131** and the duct **201.**

### EMBODIMENT 3

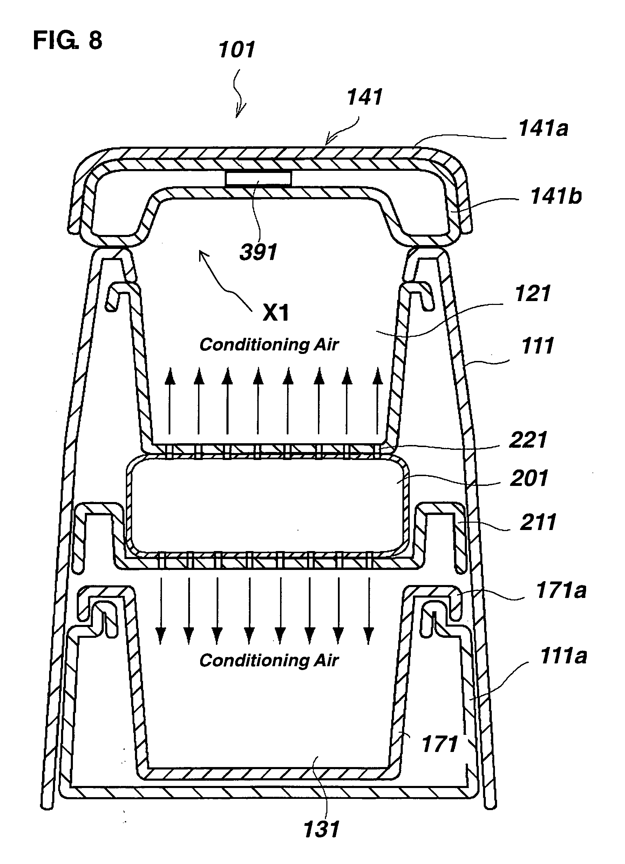

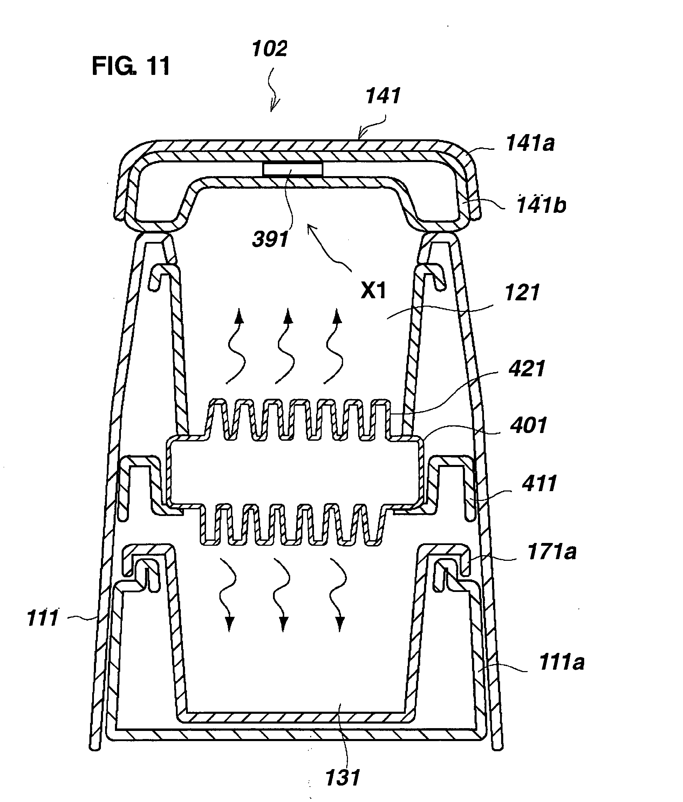

FIG. **11** is a view showing a structure of a center console **102** according to a third embodiment of the present invention, which corresponds to a sectional view taken along line ii-ii of FIG. **7A**. The same structures as those in FIG. **8** are denoted by the same reference characters.

The heat-exchanging portion is comprised of the through holes **221** in the above-described second embodiment. According to the present embodiment, however, an air-conditioning air duct **401** is made of a heat-conductive metal or resin, such as aluminum alloy, which is supported at shelves **411**, and further at the duct **401** are provided plural fins **421** as the heat-exchanging portion. These fins **421** can increase a surface area of the duct **401** which exposes to the upper storage portion **121** and the storage portion **131**.

### EMBODIMENT 4

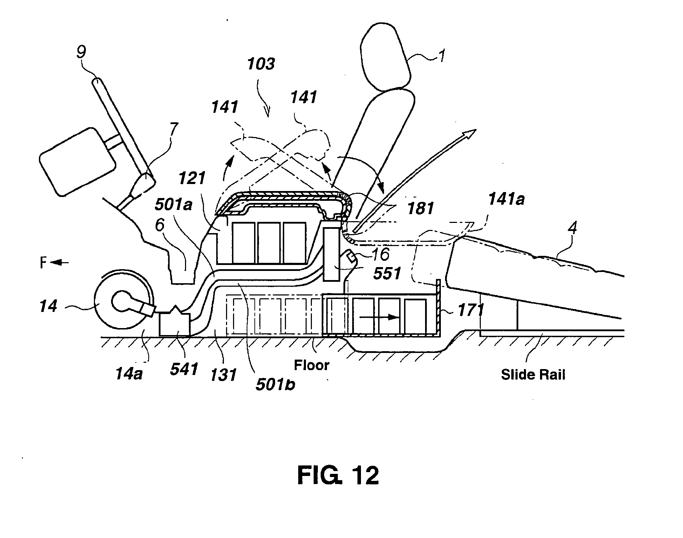

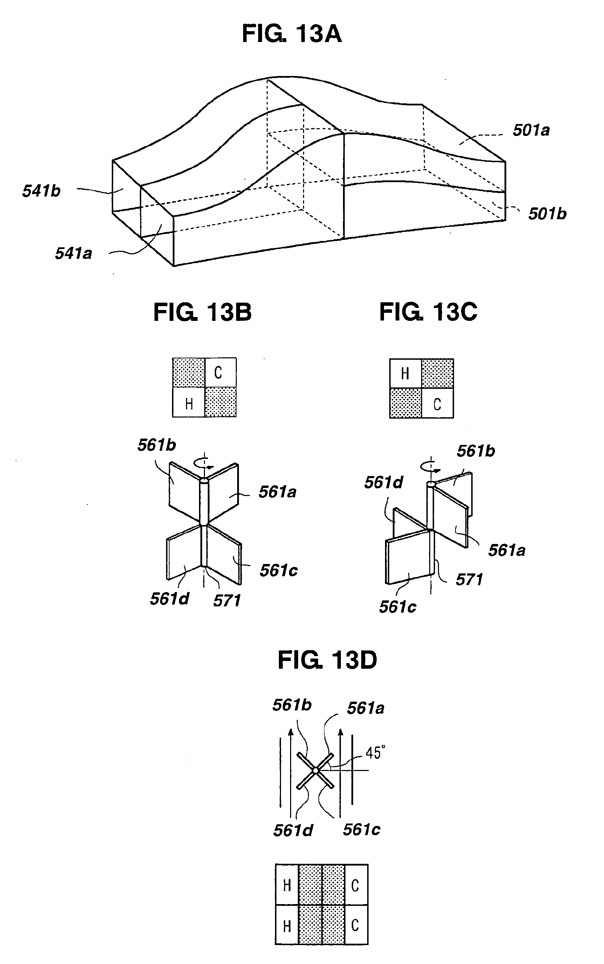

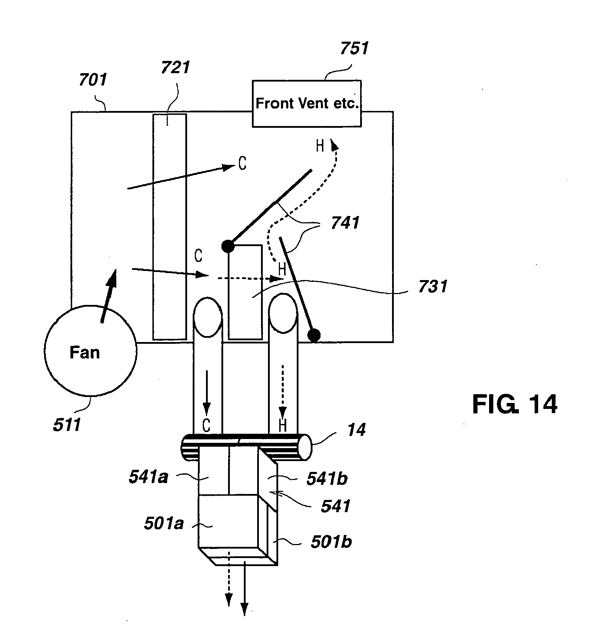

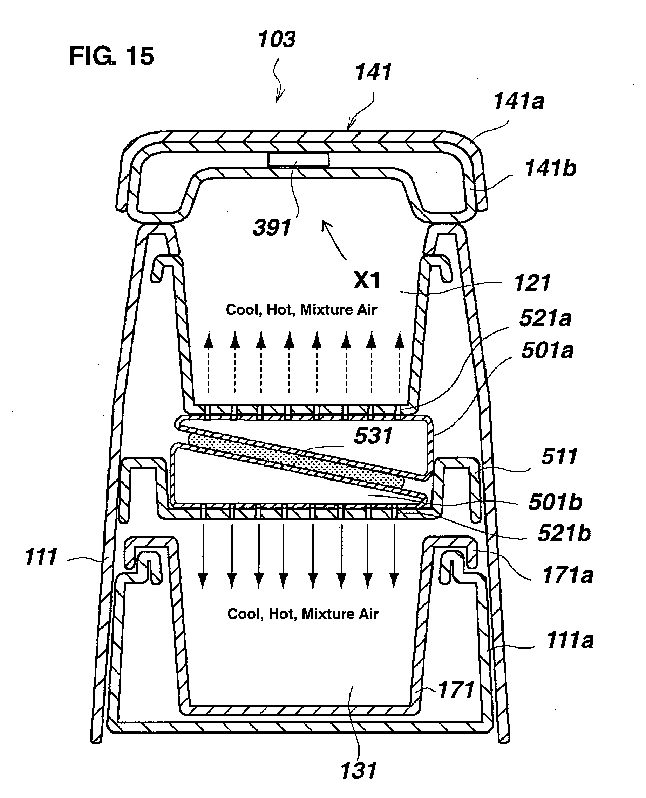

FIG. **12** is a view showing a structure of a center console **103** according to a fourth embodiment of the present invention, which corresponds to a sectional view taken along line i-i of FIG. **6**. FIGS. **13A-13D** are diagrams showing a connection structure of a blower and an air-conditioning air duct to achieve the fourth embodiment. FIG. **14** is a diagram schematically showing a structure of an air conditioner. FIG. **15** is a view showing the center console structure according to the fourth embodiment, which corresponds to a sectional view taken along line ii-ii of FIG. **7A**. Herein, the same structures as those of the first, second or third embodiments are denoted by the same reference characters.

The air-conditioning air duct **201** of the above-described second embodiment is comprised of a single duct. According to the present embodiment, however, the duct is comprised of an air-conditioning air duct **501** which is comprised of two passages, an upper one and a lower one.

Specifically, as shown in FIGS. **12** and **15****,** the air-conditioning air duct **501** comprises an upper first duct **501 a** which adjusts the temperature of the upper storage portion **121** by using the conditioning air and a lower second duct **501 b** which adjusts the temperature of the storage portion **131** by using the conditioning air. The first duct **501 a** and the second duct **501 b** have a triangular passage section respectively, as shown in FIG. **15**, and between these ducts **501 a, 501 b** is provided a heat insulating material **531** to restrain a heat transfer therebetween. Through holes **521a** which connects to the upper storage portion **121** are formed at the first duct **501 a,** and through holes **521 b** which connects to the storage portion **131** are formed at the second duct **501 b.**

Right downstream of the conditioning-air outlet **14a** of the blower **14 c** is provided a conditioning-air separating portion **541** which separates and supplies the conditioning air having different temperatures (cool air **C,** hot air **H**, or fixed air of these) to the first and second ducts **501a**, **501b**.

Further, there is provided a conditioning-air mixing portion **551** which mixes the conditioning air flowing down the first and second ducts **501 a, 501 b**, respectively. Then, the conditioning air mixed by the conditioning-air mixing portion 551 is supplied to the rear seats via the rear vent **151**.

As shown in FIG. **13**, a cool-air passage **541a** and a hot-air passage **541 b**, which are separated from each other at the conditioning-air separating portion **541,** connect to the first and second ducts **501 a, 501 b** via a valve **561**.

The valve **561** comprises an upper valve member which includes a first valve body **561a** and a second valve body **561 b,** and a lower valve member which includes a third valve body **561c** and a fourth valve body **561d.** Herein, the first valve body **561a** is operative to control connection or disconnection between the cool-air passage **541a** and the first duct **501a**. The second valve body **561b** is operative to control connection (opening) or disconnection (closing) between the hot-air passage **541 b** and the first duct **501a**. The third valve body **561** a is operative to control connection (opening) or disconnection (closing) between the cool-air passage **541 a** and the second duct **501b**. The fourth valve body **561d** is operative to control connection (opening) or disconnection (closing) between the hot-air passage **541 b** and the second duct **501 b.** The upper valve member and the lower valve member are disposed relative to a drive axis **571** so that they are located up and down at intervals of an angle of **90** degrees as shown.

Herein, when the first and fourth valve bodies **561a, 561d** take their opening positions, the second and third valve bodies **561 b, 561c** take their closing positions. In this state, the cool air **C** is supplied to the first duct **501 a,** and the hot air **H** is supplied to the second duct **501 b,** so that the upper storage portion **121** can be adjusted in the cool temperate atmosphere, while the storage portion **131** can be adjusted in the hot temperate atmosphere (FIG. **13B**).

Further, when the second and third valve bodies **561b, 561c** take their opening positions, the first and fourth valve bodies **561a**, **561d** take their closing positions. Thereby, the hot air **H** is supplied to the first duct **501 a**, and the cool air **C** is supplied to the second duct **501 b**. As a result, the upper storage portion **121** can be adjusted in the hot temperate atmosphere, while the storage portion **131** can be adjusted in the cool temperate atmosphere (FIG. **13C**). Herein, it may be preferable considering keeping warm that the upper storage portion **121** be adjusted in the hot temperate atmosphere, and the storage portion **131** be adjusted in the cool temperate atmosphere.

Further, when the valve 561 is adjusted in such a manner that the first through fourth valve bodies **561a - 561d** are located with an angle position of about 45 degrees relative to the flowing direction of the conditioning air (FIG. **13D**), these valve bodies **561a - 561d** take their partial opening positions. As a result, the mixture air of the hot air H and the cool air **C** can be supplied to the first and second ducts **501 a**, **501b** respectively, so that the upper storage portion **121** and the storage portion **131** can be adjusted to substantial the same temperature.

As shown in FIG. **14**, an air conditioner **701** generates the cool air **C** by making the outside air taken in by a fan **711** pass through an evaporator **721** and conducting heat exchanging, and it also generates the hot air **H** by making the cool air **C** pass through a heater **731**. The flow of the generated cool air **C** and hot air **H** is controlled by air mixture dampers **741**, so that at least one of the cool air **C** and the hot air **H** is supplied to a duct or a vent **751** for the front and the blower **14.** The blower **14** may be e.g. a cross flow fan or a so-called sirocco fan, as described in JP-A-07 025 224.

According to the present embodiment, the conditioning air having the different temperature can be supplied to the first and second ducts **501a**, **501b**, and the different temperature adjustment can be provided for the upper storage portion **121** and the storage portion **131**, ensuring the supply of the conditioning air with an appropriate temperature to the rear seats **3 - 5**.

### MODIFICATION OF FORTH EMBODIMENT

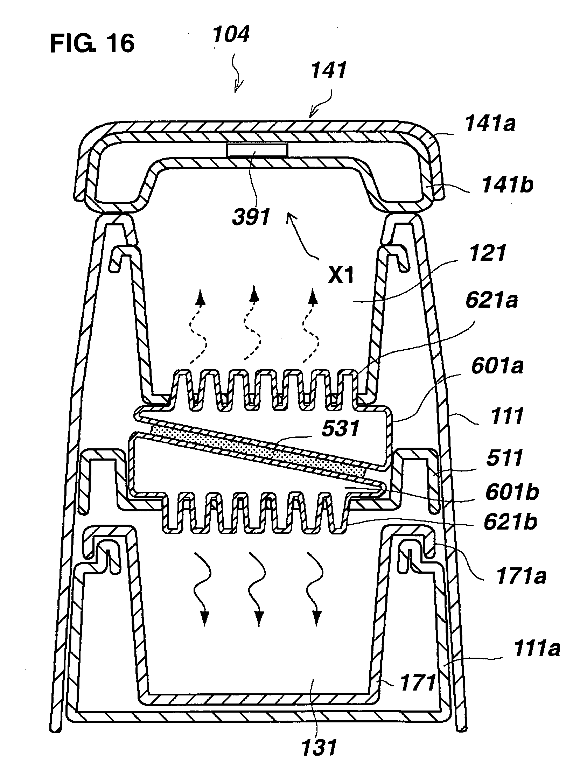

FIG. **16** is a view showing a structure of a center console **104** according to a modification of the fourth embodiment, which corresponds to a sectional view taken along line ii-ii of FIG. **7A**. Herein, the same structures as those of the embodiment shown in FIG. **15** are denoted by the same reference characters.

The heat exchanging portion of the first and second ducts **501 a**, **501 b** of the above-described fourth embodiment are comprised of the through holes **521a**, **521 b.** According to the present modification, however, first and second ducts **601a**, **601b** are made of a heat-conductive metal or resin, such as aluminum alloy, and further at the ducts **601a**, **601 b** are provided plural fins **621a**, **621 b** as the heat-exchanging portion. These fins **621 a, 621 b** can increase the surface area of the ducts **621 a, 621 b** which expose to the upper storage portion **121** and the storage portion **131.**

## Claims

1. A center console structure of a vehicle, which is located between both-side seats (**1, 2**) and in front of a rear seat (**3, 4, 5**), comprising:
a console body (**11; 111**);
an upper opening (**X; X1**) which opens at the console body (**11; 111**) on an upper sideand/or a rear opening (**Y; Y1**) which opens at the console body (**11; 111**) on a rear side;
a storage portion (**12; 131**) which is provided inside the console body (**11; 111**) so as to extend longitudinally having a specified height vertically;
a rear vent (**13a; 151**) provided at an upper portion of the storage portion (**12; 131**);
air supply means (**14**) provided in front of the storage portion (**12**; **131**) of the console body (**11; 111**); and
an air-conditioning air duct (**17; 201; 401; 501 a, 501 b; 601 a, 601 b**) which is provided so as to connect to the air supply means (**14**) and supply conditioning air to the rear vent (**13a; 151**).

2. The center console structure of a vehicle of claim 1, wherein an armrest (**13; 141**) is supported at the console body (**11; 111**) so as to open and close the upper opening (**X; X1**) and/or said storage portion (**12; 131**) being at least connected to the rear opening (**Y; Y1**).

3. The center console structure of a vehicle of any one or more of the preceding claims, wherein said storage portion (**12**) is configured to connect to said upper opening (**X**), and said armrest (**13**) includes said rear vent (**13a**) which is formed at a rear portion thereof and preferably an inside duct (**18**) which interconnects said air-conditioning air duct (**17**) and said rear vent (**13a**), wherein said air supply means is preferably a blower and wherein said air-conditioning air duct (**17**) preferably includes a conditioning-air nozzle (**22**) which connects to an inside of the storage portion (**12**),.

4. The center console structure of a vehicle of any one or more of the preceding claims, wherein said storage portion (**12**) includes a storage box (**15**) which has an upper opening and a rear face which forms a rear wall of said console body (**11**), the storage box (**15**) being configured to be stored inside the console body (**11**) and drawn rearward out of the console body (**11**).

5. The center console structure of a vehicle of claim 4, wherein said storage box (**15**) includes a shutter (**19**) which is operative to close said upper opening so as to form a tray, the shutter (**19**) being configured to move to a closing position thereof in which the shutter (**19**) closes the upper opening when the storage box (**15**) has been drawn rearward out of the console body (**11**).

6. The center console structure of a vehicle of any one or more of the preceding claims, wherein said storage box (**15**) includes an inlet (**15a**) of the conditioning air preferably supplied from the conditioning-air nozzle (**22**), wherein there is preferably further provided a device (**21**) operative to move said shutter (**19**) to the closing position in a state in which the storage box (**15**) is stored inside the console body (**11**).

7. The center console structure of a vehicle of any one or more of the preceding claims, wherein said storage portion (**12**) is configured to be accessible via said upper opening (**X**) in a state in which the storage box (**15**) has been drawn rearward out of the console body (**11**), wherein preferably an air-conditioning operational portion (**16**) for a rear vent is provided at the rear face of the storage box (**15**).

8. The center console structure of a vehicle of any one or more of the preceding claims, wherein a shift lever (**7**) is disposed or disposable in front of said armrest (**13**), said blower (**14**) is preferably disposed below the shift lever (**7**).

9. The center console structure of a vehicle of any one or more of the preceding claims, wherein a cup holder (**6**) is disposed below and behind the shift lever (**7**), wherein preferably an armrest (**13**) is disposed at a level which is lower than a shift lever (**7**) and higher than the cup holder (**6**), and said air-conditioning air duct (**17**) is provided so as to extend upward from said blower (**14**), passing below the cup holder (**6**).

10. The center console structure of a vehicle of any one or more of the preceding claims, wherein an upper storage portion (**121**) which connects to said upper opening (**X1**) is provided at said console body (**111**), said storage portion (**131**) is provided below the upper storage portion (**121**), said rear vent (**151**) is provided at a rear face of the console body (**111**) above the storage portion (**131**), and preferably said air-conditioning air duct (**201; 401; 501a, 501 b; 601 a, 601 b**) is configured to extend between the upper storage (**121**) and the storage portion (**131**) and reach the rear vent (**151**).

11. The center console structure of a vehicle of claim 10, wherein said air-conditioning air duct (**201; 401; 501a, 501 b; 601 a, 601 b**) forms a partition wall portion which partitions said upper storage portion (**121**) from said storage portion (**131**), and preferably there is provided a heat-exchanging portion (**221; 421; 521a, 521 b; 621 a, 621 b**) which performs heat exchanging between conditioning air and the upper storage portion (**121**) and/or the storage portion (**131**).

12. The center console structure of a vehicle of any one or more of the preceding claims, wherein said armrest (**141**) comprises an upper lid (**141a**) and a lower lid (**141 b**) which have substantially the same height and external shape, wherein preferably the upper lid (**141a**) has an opening (**181**) which is operative to connect to said rear vent (**151**) when the upper lid (**141a**) is turned over rearward, and preferably a tray portion is formed at a bottom face of the upper lid (**141 a**).

13. The center console structure of a vehicle of any one or more of the preceding claims, wherein said air-conditioning air duct comprises a first duct (**501a; 601a**) which adjusts a temperature of said upper storage portion (**121**) by using the conditioning air and a second duct (**501 b; 601 b**) which adjusts a temperature of said storage portion (**131**) by using the conditioning air, and there are provided a conditioning-air separating portion (**541**) which supplies the conditioning air having different temperatures to the first and second ducts (**501 a, 501 b; 601 a, 601 b**) and a conditioning-air mixing portion (**551**) which mixes the conditioning air flowing down the first and second ducts (**501 a, 501 b; 601 a, 601 b**) respectively.

14. The center console structure of a vehicle of any one or more of the preceding claims, wherein said armrest (**141**) comprises a mechanism which enables the armrest (**141**) to rotate forward around an axis provided at a front end of the upper storage portion (**121**) or to rotate rearward around an axis provided at a rear end of the upper storage portion (**121**).

15. The center console structure of a vehicle of any one or more of the preceding claims, wherein a cup holder (**6**) is provided above and in back of said blower (**14**), and a conditioning-air outlet (**14a**) of the conditioning air from the blower (**14**) is provided below the cup holder (**6**).
